# EUROPEAN PATENT APPLICATION

(11) **EP 2 221 233 A1**
(43) Date of publication of application: **25.08.2010**
(21) Application number: 10152595.4
(22) Date of filing: 04.02.2010
(51) Int. Cl.: B62B 7/08

(54) **Infant stroller**

(30) Priority: 23.02.2009 ES 200900569
(71) Applicant: Play, S.A., 08184 Palau-Solità I Plegamans (ES)
(72) Inventor: Jane Stopp, Joaquin, 08184 Palau de Plegamans (ES)
(74) Representative: Ponti Sales, Adelaida

(57) **Abstract**

The infant stroller comprises a frame formed by a plurality of bars hinged to each other, two of these bars (1) being substantially vertical in the use position of the infant stroller, in whose lower part are placed the rear wheels (2) of the infant stroller, and it is **characterized in that** said rear wheels (2) are movable along said substantially vertical bars (1), defining an use position and a folding position, in which the rear wheels (2) do not protrude substantially with respect to said substantially vertical bars (1).

It permits to move the rear wheels when the stroller is folded in a simpler way than in the currently known stroller, because said rear wheels do not rotate, but they move along a straight line.

## Description

### INFANT STROLLER

The present invention refers to an infant stroller, of the called umbrella-kind, in which the folding is done moving its sides to each other.

### BACKGROUND OF THE INVENTION

The infant strollers called of umbrella-kind are currently known, in which the folding of the stroller is done by hinged bars forming an X-shape between the rear wheels and the frontal wheels of the stroller, so that the wheels of one side of the stroller move to the wheels of the other side of the stroller.

Even though the folded stroller occupies a very reduced width, this umbrella-kind folding has the drawback that its length can be excessive, e.g. if it is placed inside the boot of an automobile with reduced dimensions.

To solve this drawback the infant stroller described in the European patent application EP-A-1 972 522 was devised, that claims the priority of the Spanish utility model U200700618.

This infant stroller comprises two hinges in the support of the rear wheels, a first hinge that permits the folding with respect to the corresponding leg and a second hinge that permits to increase the folding degree of the support itself in the stroller folding. To achieve that this hinge rotates the wheels inwardly it is necessary the presence of rods, indicated by numeral reference 15, that are placed between the lower stretch of the supports of the rear wheels and the bars which form the X-shape hinge.

As it is evident, the presence of said rods and of said double hinge in the support of the rear wheels makes the folding mechanism of the stroller complex and, consequently, it increases the cost of the stroller.

An alternative and simpler solution to that described in said document is disclosed in the Spanish patent application P200803274, of the same applicant than the present application and not published at the filing date of the present application.

On the other hand, it is also known the infant stroller described in the Spanish utility model U200702132, of the same applicant than the applicant of the present application. This document discloses an infant stroller that comprises a frame formed by a plurality of bars hinged to each other, two of these bars being substantially vertical in the use position of the infant stroller, in which lower part are placed the rear wheels of the infant stroller. Furthermore, the infant stroller comprises a pair of rods hinged between said vertical bars to permit the folding of the stroller, the upper end of said rods sliding along said vertical bars. However, in this case the rear wheels are not movable at all in its folding position.

### SUMMARY OF THE INVENTION

With the infant stroller of the invention said drawbacks can be solved, presenting other advantages that will be described.

The infant stroller of the present invention comprises a frame formed by a plurality of bars hinged to each other, two of these bars being substantially vertical in the use position of the infant stroller, in whose lower part are placed the rear wheels of the infant stroller, and it is **characterized in that** said rear wheels are movable along said substantially vertical bars defining an use position and a folding position, in which the rear wheels do not protrude substantially with respect to said substantially vertical bars.

Thanks to this feature, the rear wheels are moved when the stroller is folded in a more simple way than in the strollers currently known, because said rear wheels do not describe a rotation movement, but a straight translation movement.

According to a preferred embodiment, the infant stroller of the present invention also comprises a pair of rods hinged between said vertical bars to permit the folding of the stroller, the upper end of said rods sliding along said vertical bars, the upper end of each rod being integral with one of the rear wheels of the stroller, so that when the stroller is folded said hinged rods trail the rear wheels to their folding position.

Advantageously, each rear wheels is integral with the upper end of a hinged rod by a plate that slides inside a guide provided inside each substantially vertical bar.

### BRIEF DESCRIPTION OF THE DRAWINGS

For a better understanding of what has been disclosed some drawings are attached in which, diagrammatically and only as a non-limitative example, a practical case of embodiment is shown.
Fig. 1 is a perspective view of the rear part of the infant stroller in its use position;
Fig. 2 is a perspective view of the rear part of the infant stroller in an intermediate position;
Fig. 3 is a perspective view of the rear part of the infant stroller in its folded position; and
Fig. 4 is a side view of the rear part of the infant stroller in its folded position.

### DESCRIPTION OF A PREFERRED EMBODIMENT

Firstly, it must be pointed out that the infant stroller of the present invention is only partially shown for simplicity reasons, because the rest of the stroller that is not shown is conventional.

The stroller of the present invention comprises a frame formed by a plurality of bars hinged to each other. Two of these bars are substantially vertical bars 1 placed at the rear part of the stroller and that comprise, in their lower part, the rear wheels 2 of the stroller.

Between both vertical bars 1 there are a pair of hinged rods 3, whose driving permits the stroller frame to be folded.

The upper end of each hinged rod 3 can slide along said vertical bars 1. According to the embodiment shown, said sliding is done along a guide 4 provided in said vertical bars 1.

Each rear wheel 2 is integral with one of the upper ends of the hinged rods 3, so that when they slide along the guide 4, the rear wheels 2 also move along the vertical bars 1, defining a use position and a folding position.

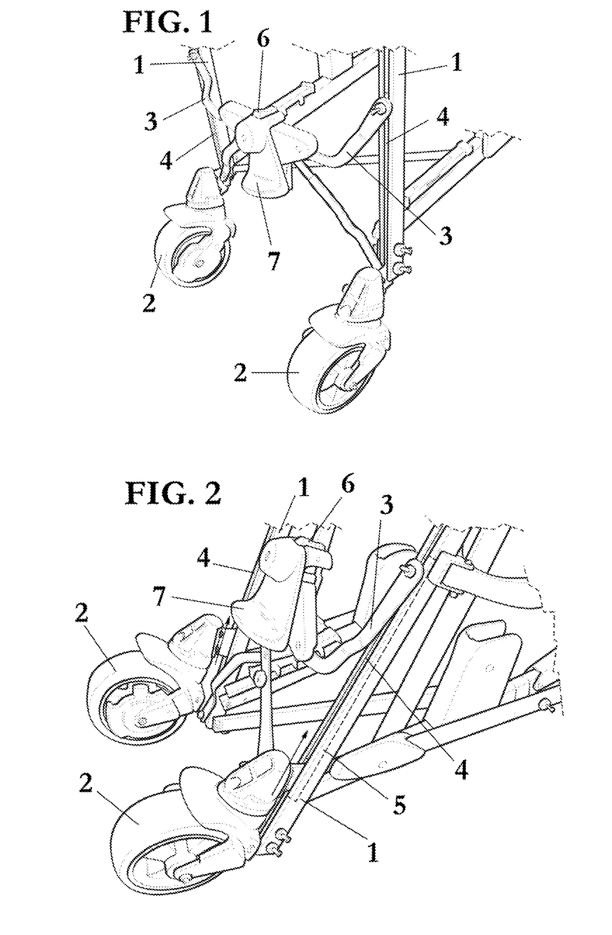

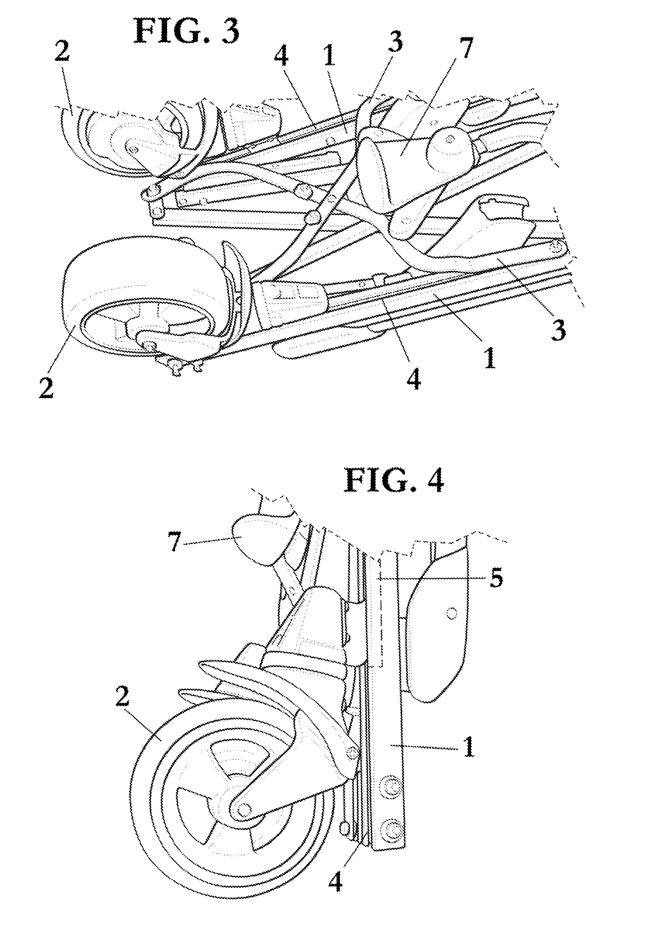

In the use position, shown in Fig. 1, the rear wheels 2 protrude completely from the lower end of the vertical bars 1. On the other hand, in the folded position, shown in Figs. 3 and 4, the rear wheels 2 do not protrude substantially from the lower end of the vertical bars 1. It must be pointed out that when is cited that the rear wheels "do not protrude substantially", it means that approximately the half or more of the wheels do not protrude from the lower ends of the vertical bars 1.

To transmit the movement of the upper end of the rods 3 to each rear wheel 2 it is provided a plate 5 (shown in dotted lines in Figs. 2 and 4) for each vertical bar 1, which slides also inside the guide 4 of each of the vertical bars 1.

The rest of the folding mechanism is not described, because it is conventional for the umbrella-kind strollers and it does not form part of the present invention.

From the use position, shown in Fig. 1, when the user wants to fold the stroller, he/she must simply to unlock the lock 6, which can be of conventional kind, to unlock the movement of the hinged rods 3.

Once unlocked the hinged rods 3, it is necessary to push upwardly the connection knot of the rods 3, which makes the upper ends of the rods 3 to slide along the guide 4 of the vertical bars 1.

This sliding movement, thanks to the action of the plates 5 placed between the respective upper ends of the rods 3 and the rear wheels 2, makes the rear wheels 2 to move upwardly, as it is shown by the arrows in Fig. 2.

When the movement of the rear wheels 2 is complete, they are placed in their folding position, shown in Figs. 3 and 4.

Therefore, there is the advantage that the total length of the stroller of the present invention is reduced, this reduction being obtained with a very simple mechanism.

Even though reference is made to an specific embodiment of the invention, it is apparent for a person skilled in the art that the described infant stroller is susceptible of numerous variations and modifications, and that all the details mentioned can be substituted with other technically equivalent ones, without departing from the scope of protection defined by the attached claims.

## Claims

1. Infant stroller, comprising a frame formed by a plurality of bars hinged to each other, two of these bars (1) being substantially vertical in the use position of the infant stroller, in whose lower part are placed the rear wheels (2) of the infant stroller, **characterized in that** said rear wheels (2) are movable along said substantially vertical bars (1) defining an use position and a folding position, in which the rear wheels (2) do not protrude substantially with respect to said substantially vertical bars (1).

2. Infant stroller according to claim 1, which also comprises hinged rods (3) between said vertical bars (1) to permit the folding of the stroller, the upper end of said rods (3) sliding along said vertical bars (1), the upper end of each rod (3) being integral with one of the rear wheels (2) of the stroller, so that when the stroller is folded said hinged rods (3) trail the rear wheels (2) to their folding position.

3. Infant stroller according to claim 2, wherein each read wheel (2) is integral with the upper end of a hinged rod (3) by a plate (5) that slides inside a guide (4) provided inside each substantially vertical bar (1).
